(19) Europäisches Patentamt
European Patent Office
Office européen des brevets

(11) EP 1 447 433 B1

(12) EUROPEAN PATENT SPECIFICATION

(45) Date of publication and mention of the grant of the patent:
**05.10.2011 Bulletin 2011/40**

(21) Application number: **02770239.8**

(22) Date of filing: **23.10.2002**

(51) Int Cl.:
***C09D 183/00*** *(2006.01)* ***C09D 7/12*** *(2006.01)*
***G02B 1/11*** *(2006.01)*

(86) International application number:
**PCT/JP2002/010981**

(87) International publication number:
**WO 2003/035780 (01.05.2003 Gazette 2003/18)**

# (54) COATING MATERIAL COMPOSITION AND ARTICLE HAVING COATING FILM FORMED THEREWITH

LACK SOWIE DAMIT LACKIERTER GEGENSTAND

COMPOSITION DE MATERIAU DE REVETEMENT ET ARTICLE DOTE D'UN FILM DE REVETEMENT FORME AVEC CETTE DERNIERE

(84) Designated Contracting States:
**DE FR GB NL**

(30) Priority: **25.10.2001 JP 2001327878**

(43) Date of publication of application:
**18.08.2004 Bulletin 2004/34**

(73) Proprietor: **Panasonic Electric Works Co., Ltd.**
**Kadoma-shi**
**Osaka (JP)**

(72) Inventors:
- **YAMAKI, T.;**
**c/o MATSUSHITA ELECTRIC WORKS, LTD**
**Kadoma-shi, Osaka 571-8686 (JP)**
- **YOKOGAWA, H.;**
**c/o MATSUSHITA ELECTRIC WORKS, LTD**
**Kadoma-shi, Osaka 571-8686 (JP)**
- **TAKAHAMA, K.;**
**c/o MATSUSHITA ELECTRIC WORKS, LTD**
**Kadoma-shi, Osaka 571-8686 (JP)**
- **YOKOYAMA, M.;**
**c/o MATSUSHITA ELECTRIC WORKS, LTD**
**Osaka 581-0868 (JP)**
- **TSUJIMOTO, A.;**
**c/o MATSUSHITA ELECTRIC WORKS, LTD**
**Kadoma-shi, Osaka 571-8686 (JP)**
- **ITOU, N.;**
**c/o MATSUSHITA ELECTRIC WORKS, LTD**
**Kadoma-shi, Osaka 571-8686 (JP)**
- **KAWANO, K.;**
**c/o MATSUSHITA ELECTRIC WORKS, LTD**
**Kadoma-shi, Osaka 571-8686 (JP)**
- **KISHIGAMI, Y.;**
**c/o MATSUSHITA ELECTRIC WORKS, LTD**
**Kadoma-shi, Osaka 571-8686 (JP)**
- **IDE, N.;**
**c/o MATSUSHITA ELECTRIC WORKS, LTD.**
**Kadoma-shi, Osaka 571-8686 (JP)**

(74) Representative: **von Kreisler Selting Werner**
**Deichmannhaus am Dom**
**Bahnhofsvorplatz 1**
**50667 Köln (DE)**

(56) References cited:
**WO-A-99/02592 JP-A- 6 003 501**
**JP-A- 2001 233 611**

- **PATENT ABSTRACTS OF JAPAN vol. 2002, no. 07, 3 July 2002 (2002-07-03) & JP 2002 079616 A (TOSHIBA CORP; ASAHI GLASS CO LTD; CATALYSTS & CHEM IND CO LTD), 19 March 2002 (2002-03-19)**
- **25 February 1963, SEIBUNDO SHINKOSHA PUBLISHING CO., LTD. article SADAKICHI YAMADA: 'Gosei toryo - gosei kanseiyu oyobi gosei jushi -', pages 158 - 160, XP002962951 7th edition**
- **KAGAKU DAIJITEN HENSHU IINKAI, 05 July 1962, KYORITSU SHUPPAN CO., LTD. article 'Kagaku Daijiten 4', pages 871 - 871, XP002962952 first edition, 2nd print**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 447 433 B1

**Description**

CROSS-REFERENCE TO RELATED APPLICATION

The present application claims priority under the Paris Convention from Japanese Patent Application No. 2001-327878, filed on October 25, 2001 and entitled "Coating Material composition and Article Coated with the same", the contents of which are incorporated herein-by reference in their entirety.

TECHNICAL FIELD

The present invention relates to a coating material composition that is used for forming a coating film (or layer) having a low refractive index, and an article having the coating film (or layer).

BACKGROUND ART

As a material having a low refractive index, examples of inorganic materials include $MgF_2$ (refractive index of 1.38), $SiO_2$ (refractive index of 1.47) and the like. On the other hand, examples of organic materials include perfluororesin (refractive index of 1.34 to 1.40) and the like. In general, $MgF_2$ is formed by a gas phase method such as vacuum vapor deposition and sputtering method, and $SiO_2$ is formed by the same gas phase method as that used for $MgF_2$ and a liquid phase method via a sol-gel method, while perfluororesin is formed by a liquid phase method.

For example, when the materials having a low refractive index described above are used for a purpose of preventing reflection in an image display panel including a display and the like, in most cases, antireflective property is obtained by forming two or more layers comprising a material having a high refractive index and a material having a low refractive index on a substrate surface such as glass. In addition, as to the difference in refractive index between the material having the high refractive index and the material having the low refractive index, both of which constitute the layers, although there is a proper range of the difference, it is known that the larger the difference, the smaller the bottom value (minimum value) of the reflectance. Conventionally, when a layer is formed on a surface of a soda-lime glass substrate (refractive index of 1.54), even if the material having the lowest refractive index presently known in the art, i.e., perfluororesin (refractive index of 1.34) is used, the difference of the refractive indices is only 0.20. In order to obtain high antireflective property, a layer of a material having a high refractive index should be present as an intermediate layer between the substrate and the material having the low refractive index. However, it is expected that if a material having a lower refractive index than perfluororesin could be obtained, the antireflective property would possibly be improved with a single layer by applying the material having the lower refractive index on the surface of the soda-lime glass substrate. Further, in addition to the antireflective property, if an antistatic property and the like are required, another layer will be needed on the surface of the substrate, and multi-layers will be needed. However, it is expected that if a material having a lower refractive index than perfluororesin could be obtained, degree of freedom in design of the multi-layers would become large, and more improved antireflective properties could be obtained.

Meanwhile, Japanese Unexamined Patent Application Publication No. 2001-233611 (P2001-233611A) discloses fine hollow spherical silica-based particles having a refractive index, which is lower than that of perfluororesin. It is described that the each of fine particles comprises a cavity surrounded with a shell and that the refractive index of the fine particles themselves may be 1.30 or less. It is suggested that a coating material composition, which is obtained by dispersing such fine particles in a matrix-forming material, is applied and dried to form a transparent coating film having a low refractive index.

A concept itself that a coating film having a low refractive index can be formed using the fine hollow particles as mentioned above, is generally known per se, but a concrete technological matter that is required to form such coating film is still insufficient.

Therefore, an object of the present invention is to provide an industrially practicable composition for forming a coating film having a low refractive index by conducting repeatedly researches on a coating material composition which comprises fine hollow particles and a matrix-forming material, and as a result, the present inventors have found that in order to form a coating film having a low refractive index, it is important for a matrix-forming material to have specific properties, and then have completed the present invention.

DISCLOSURE OF THE INVENTION

The present inventors have diligently repeated researches, and as a result, they have found that in a coating material composition comprising fine hollow particles and a matrix-forming material, in order to form a coating film having a low refractive index, it is important for the matrix-forming material to have a property of forming a porous matrix. And on the basis of this finding, a further study has shown that the coating film having a mechanical strength can be formed.

Accordingly, the present invention provides a coating material composition comprising at least fine hollow particles and a matrix-forming material, wherein when the coating material composition is applied and dried to form a coating film, the matrix-forming material forms a porous matrix. The use of the composition according to the present invention makes it possible to form a coating film having a low refractive index on a substrate. In such coating film, the fine hollow particles are present as a filler, the matrix-forming material forms a matrix in the coating film to be formed, and the matrix serves as a binder which binds the fine hollow particles which are present as a filler in the coating film, resulting in the fine hollow particles being retained in the coating film as a confined state.

The matrix-forming material has the property of forming a porous matrix. The term "property of forming a porous matrix" means a property that when a liquid mixture obtained by dissolving a matrix-forming material in proper liquid solvents (for example, water, organic solvents and the like) is applied on a substrate and when a paint film formed (i.e. an applied layer thus formed) is dried, a resulting "film-like material" as a coating film becomes a porous material comprising micropores (or fine voids). The structures of the micropores are not particularly limited. The micropores may be discontinuous as closed cells, or may be continuous as open cells. Shapes of the micropores are not particularly limited, and for example, they may be in forms of a spherical form, or a thin and long hollow form. In the coating film which is obtained by applying and drying the composition of the present invention, when micropores are present on boundaries between the matrix and the fine hollow particles and/or boundaries between fine hollow particles, it is considered that these "other micropores" are also essentially identical with the micropores which constitute the "porosity" of the matrix.

In the drying process of the paint film as described above, the matrix material may be chemically changed or unchanged, during the conversion of the matrix-forming material to the matrix. Such chemical changes may be those of the matrix-forming material, for example, by hydrolysis reaction followed by condensation, cross-linking reaction, condensation or the like. Even if the matrix-forming material may be chemically unchanged, a structure of the matrix-forming material changes from a liquid-dissolved form to a porous form. The drying refers to a treatment in which the liquid component of the paint film formed by the application becomes substantially absent, thereby a solid coating film remains. In the drying process, heating may be applied. (In the present description, the coating film obtained by drying as described is referred to as a "dried coating film (or layer)"). Moreover, as to the drying of the paint film obtained by applying the coating material composition in order to form the coating film from the coating material composition of the present invention, the meaning of the drying is the same as defined herein, and the drying process may be performed under heating.

As mentioned above, the term the "porous matrix" in the present invention implies that in the coating film formed by using the coating material composition of the present invention, the matrix present in the periphery of the fine hollow particles acts as the binder and comprises a number of micropores therein. Therefore, an apparent specific gravity of the matrix is smaller than a true specific gravity of the material itself, which constitutes the matrix (that is, the material having no substantial micropores therein). A ratio of the apparent specific gravity of the matrix to the true specific gravity of the matrix should be preferably 0.90 or less, and more preferably, 0.75 or less, for example from 0.50 to 0.75. Further, when the coating includes the "other micropores", the ratio is a value calculated based on the volume including such micropores. Furthermore, the micropores in the matrix, generally, contain a gas surrounding the coating film.

The matrix formed from the matrix-forming material may be porous ones including, for example, perfluororesins, silica-based resins (for example, those which are generally known as silicone resins) and the like. Sometimes the perfluororesins are not sufficiently compatible with fine hollow-silica particles, and in this case, the fine hollow particles may not easily be dispersed uniformly in the form of the coating material composition. The silica-based resins generally have a good compatibility with the fine hollow-silica particles, and an excellent dispersible property on stability in the form of the coating material composition.

Furthermore, when the matrix-forming material is subjected to drying and converted to the porous matrix, mechanism in that the matrix-forming material is converted to the porous matrix may be any appropriate mode. For example, a mechanism may be taken wherein a "film-like material" itself constitutes a porous structure by a chemical change of the matrix-forming material in the process for obtaining the "film-like material" by drying the paint film of the liquid mixture comprising the matrix-forming material. Concretely, the matrix-forming material can form a matrix that inherently has the porous structure caused by cross-linking and/or condensation of the matrix-forming material. Also, in another embodiment, a mechanism may be taken wherein the liquid component is removed from the paint film of the liquid mixture comprising the matrix-forming material, and then regions which the liquid component previously occupied remain intact as micropores. Furthermore, a mechanism may be taken wherein some parts of the matrix-forming material comprise functional groups which can be relatively readily pyrolyzed, and after forming the dried coating film followed by further heating to pyrolyze the functional groups, the regions previously occupied by the functional groups remain as micropores as they are. Furthermore, a method may be taken wherein a molecular structure in a liquid phase of the matrix-forming material is converted (for example, a ratio of three-dimensional cross-linking to two-dimensional cross-linking is changed or, a molecular weight thereof is changed) when the dried coating film is obtained. The greater the fraction of two-dimensional cross-linking, or the smaller the molecular weight thereof, the more porous dried coating film

tends to become.

In the present invention, the term "fine hollow particles" refer to particles having cavities surrounded by shells. A refractive index of the fine hollow particles themselves should be preferably in the range between 1.20 and 1.40, more preferably between 1.20 and 1.35. Further, the refractive index of the fine hollow particles may be measured by a method as described in Japanese Unexamined Patent Application Publication No. 2001-233611 (P2001-233611A). An outer diameter of the fine hollow particles should be preferably in the range between 5 and 2000 nm, and more preferably between 20 and 100 nm. The shells may be composed of any preferable materials. Examples of such preferable materials include metal oxides, silica and the like. As the fine hollow particles, it is preferable to use those for which thickness of the shells is thinner in comparison with the mean particle diameter, and it is also preferable that volume occupied by the fine hollow silica particles in the coating film is large. Such fine hollow particles are described in Japanese Unexamined Patent Application Publication No. 2001-233611 (P2001-233611A) and the fine hollow particles as described in the publication may be used in the coating material composition of the present invention. The contents of this publication are incorporated herein by reference.

As the materials constituting the shells of the fine hollow particles, more concretely, the following materials can be used alone or in combination: $SiO_2$, $SiO_x$, $TiO_2$, $TiO_x$, $SnO_2$, $CeO_2$, $Sb_2O_5$, ITO, ATO, $Al_2O_3$ and the like. Further, composite oxides of any combinations of these materials may be included. Furthermore, as to $SiO_x$, preferred is $SiO_x$, which will be converted to $SiO_2$ when baked under an oxidative atmosphere.

In one embodiment of the coating material composition according to the present invention, it is preferable that a refractive index of the fine hollow particles should be smaller than that of the "film-like material" formed by drying the paint film of the matrix-forming material. (This refractive index of the "film-like material" is referred to as the "refractive index of the coating film" of the matrix-forming material.) In this case, the difference between them should be at least 0.05, and preferably, at least 0.10. In this case, it is preferable that the refractive index of the film-like material should be relatively small, and for example, the range between 1.35 and 1.50 is particularly preferable. In another embodiment, it is preferable that the refractive index of the fine hollow particles should be greater than that of the "film-like material", and in this case, the difference between them should be at least 0.10, and preferably, at least 0.15. Also, it is considered that the refractive index of the "film-like material" corresponds to that of the matrix part of the coating film formed from the coating material composition.

Furthermore, the present invention provides an article comprising a substrate having the coating film thereon in which the coating film is obtained by applying to the substrate the coating material composition of the present invention as described above and in the following and drying the paint film, and if necessary, the coating film may be subjected to heat treatment.

## EMBODIMENTS OF CARRYING OUT THE INVENTION

In one embodiment of the coating material composition of the present invention, the matrix-forming material which forms the porous matrix is one of silicon compounds having siloxane bonds (for abbreviation, is referred to as "silicon compounds (1)"), or one of silicon compounds being able to generate new siloxane bonds in the process for forming the "film-like material" as mentioned above (for abbreviation, is referred to as "silicon compounds (2)"). The latter silicon compounds may already have the siloxane bonds. These silicon compounds may include organosilicon compounds (that is, silicon compounds having an organic group(s)), halogenosilicon compounds (compounds containing a halogen(s) for example chlorine and fluorine and the like) and organohalogenosilicon compounds (that is, compounds containing both an organic group(s) and a halogen(s)) and the like.

The silicon compounds, which can be used in the coating material composition of the present invention, may include hydrolyzable organosilanes represented by the following general formula (A):

$$R^1_nSiY_{4-n} \qquad (A)$$

(wherein $R^1$ represents the same or different substituted or unsubstituted, monovalent hydrocarbon groups having 1 to 9 carbon atoms or phenyl group, n represents an integer of 0 to 2, and Y represents hydrolyzable functional groups), compounds produced by hydrolysis of the above organosilanes (compounds produced by partial hydrolysis of the above organosilanes are also included) and

compounds produced by condensation of the above hydrolyzed compounds and the like.

$R^1$ in the hydrolyzable organosilanes represented by the above general formula (A) represents monovalent hydrocarbon groups having 1 to 9 carbon atoms which may be substituted or unsubstituted, and includes, for example, alkyl groups such as methyl group, ethyl group, propyl group, butyl group, pentyl group, hexyl group, heptyl group, octyl group and the like; cycloalkyl groups such as cyclopentyl group, cyclohexyl group and the like; aralkyl groups such as 2-phenylethyl group, 2-phenylpropyl group, 3-phenylpropyl group and the like; aryl groups such as phenyl group, tolyl group and the like; alkenyl groups such as vinyl group, allyl group and the like; halogen-substituted hydrocarbon groups

such as chloromethyl group, γ-chloropropyl group, 3,3,3-trifluoropropyl group and the like; substituted hydrocarbon groups such as γ-methacryloxypropyl group, γ-glycidoxypropyl group, 3,4-epoxycyclohexylethyl group, γ-mercaptopropyl group and the like. Among them, in view of easiness of synthesis or easiness of availability, the alkyl groups having 1 to 4 carbon atoms and the phenyl group are preferred.

The hydrolyzable functional group Y includes, for example, alkoxy groups, acetoxy group, oxime groups (-O-N=C-R(R')), enoxy groups (-O-C-(R)=C(R')R"), amino groups, aminoxy groups (-O-N-(R)R'), amide groups (-N(R)-C(=O)-R') (in these groups, each of R, R' and R" independently represents, for example, hydrogen atom or monovalent hydrocarbon groups and the like) and the like. Among them, in view of easiness of availability, the alkoxyl groups are preferred.

Such hydrolyzable organosilanes include, for example, di-, tri- or tetrafunctional alkoxysilanes, acetoxysilanes, oximesilanes, enoxysilanes, aminosilanes, aminoxysilanes, amidosilanes and the like wherein n in the above general formula (A) is an integer of 0 to 2. Among them, in view of easiness of availability, the alkoxysilanes are preferred.

Especially, the tetraalkoxysilanes wherein n=0, may include, for example, tetramethoxysilane, tetraethoxysilane and the like; the organotrialkoxysilanes wherein n=1, may include, for example, methyltrimethoxysilane, methyltriethoxysilane, methyltriisopropoxysilane, phenyltrimethoxysilane, phenyltriethoxysilane, 3,3,3-trifluoropropyltrimethoxysilane and the like; and the diorganodialkoxysilanes wherein n=2, may include, for example, dimethyldimethoxysilane, dimethyldiethoxysilane, diphenyldimethoxysilane, diphenyldiethoxysilane, methylphenyldimethoxysilane and the like.

When the matrix-forming material in the coating material composition of the present invention is silicon compounds obtained by generating new siloxane bonds, silicon compounds wherein at least two of groups selected from the hydrolyzable substituents and hydroxyl group are bonded to silicon atoms which are the same or different, are preferred. At least two of these groups may be the same or different. The hydrolyzable substituents are hydrolyzed in the presence of water to give compounds having hydroxyl groups (silanol compounds). Therefore, the silicon compounds wherein at least two of the groups selected from the hydrolyzable substituents and hydroxyl group are bonded to silicon atoms which are same or different, produce new siloxane bonds by condensation with the same kind or different kind of silicon compounds wherein at least two of groups selected from the hydrolyzable substituents and hydroxyl group are linked to silicon atoms which are the same or different, in the presence of water.

In one embodiment, in the coating material composition of the present invention, the silicon compounds which can be used as the matrix-forming material are silane compounds as represented by the following general formula(1) (herein, they are referred to as "silane compounds (1)"):

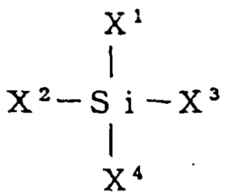

(1)

wherein each of substituents $X^1$, $X^2$, $X^3$ and $X^4$ is a group selected from hydrogen, halogens (for example, chlorine, fluorine and the like), monovalent hydrocarbon groups, alkoxyl groups represented by OR (R is a monovalent hydrocarbon group) and hydroxyl group represented by OH, these substituents may be completely or partially different from one another, or completely the same as one another, and each of at least two of these substituents is a group selected from the alkoxyl groups and hydroxyl group. The silane compounds (1) correspond to the above silicon compounds (2), and have at least two, preferably three, and more preferably four alkoxyl groups and/or hydroxyl groups, each of which are the same or different. The matrix-forming material may be one in which at least one of the alkoxyl groups in the silane compounds (1) are hydrolyzed.

In another embodiment, the silicon compounds acting as the matrix-forming material are siloxane compounds or polysiloxane compounds (herein, these compounds are referred to as "(poly)siloxane compounds (1)") which are produced by condensing one or more the silane compounds (1), after hydrolyzing the silane compounds (1) in case when the silane compounds (1) can be hydrolyzed. Polysiloxane compounds also mean compounds having two or more siloxane bonds. The (poly)siloxane compounds correspond to the silicon compounds (1). The polysiloxane compound (1) having at least two alkoxyl groups and/or hydroxyl groups as substituents are preferred (herein, such (poly)siloxane compounds are referred to as "(poly)siloxane compounds (2)"). In this case, the (poly)siloxane compounds already having the siloxane bonds correspond to the silicon compounds (2).

Also, when the silane compounds (1) and (poly)siloxane compounds (2) have alkoxyl groups, they may have hydroxyl groups which are produced by hydrolyzing the alkoxy groups. As a result, when the coating material composition is applied and dried, the silane compound (1) and (poly)siloxane compounds (2) are at least partially condensed to be

cross-linked, thus allowing the formation of the porous matrix. Therefore, in the condensation, not all of the resulting hydroxyl groups are involved in the condensation, and generally, some hydroxyl groups are retained as they are. Moreover, even if the (poly)siloxane compounds (1) do not have substituents such as alkoxyl groups and/or hydroxyl group (s), when the coating material composition is applied and dried, the (poly)siloxane compounds can form the porous matrix.

As described, although the silane compounds (1) and (poly) siloxane compounds (2) are cross-linked to form the porous matrix, hydroxyl groups as the substituents or hydroxyl group formed by the hydrolysis of the alkoxyl groups when the substituents are the alkoxy groups, undergoes the cross-linking due to the condensation among the silicon compounds or remains without involving the cross-linking, thus making it possible to serve as hydrophilic groups and to improve adhesion onto the substrate and the like. Also, this makes the coating film less susceptible to electrical charging.

Such silane compounds (1) preferably have a molecular weight of 40 to 300, and more preferably 100 to 200. Also, the (poly)siloxane compounds (1) and (2) preferably have a weight average molecular weight of 200 to 2000, more preferably 600 to 1200, when a mechanical strength of the dried coating film is required. The molecular weight in the above range gives the compounds tendency to easily achieve an improvement of strength of the dried coating film and an increase in a porosity of the matrix (that is, the proportion of the micropores in the matrix). Further, the (poly)siloxane compounds(1) and (2) preferably have a weight average molecular weight of 2000 or more, more preferably 3000 or more, for example, 3000 to 5000, when high mechanical strength of the dried coating film is not required. Under the conditions where larger molecular weight compounds are formed such as these, the hydrolysis reaction is promoted and unreacted alkoxyl groups are nearly absent. As a result, the porosity of the dried coating film and also the refractive index as the condensate are reduced, and therefore, the resulting binder has a tendency to have a lower refractive index.

When such matrix-forming material is used in a paint form together with the fine hollow particles and applied to the substrate to form the paint film (or applied layer) and then dried, the porous coating film will be formed. Also, as described above, the drying may be carried out simultaneously with heating.

In one preferred embodiment of the present invention, the coating material composition comprises the tetrafunctional hydrolyzable organosilanes as represented by $SiX_4$ (X is a hydrolyzable monovalent organic substituent, for example, an alkoxyl group), as the matrix-forming material. The tetrafunctional hydrolyzable organosilanes are included in the silane compounds (1). In one preferred embodiment of the present invention, the coating material composition comprises, as the matrix-forming material, compounds having siloxane bonds, which compounds are formed by condensing compounds produced by partially and/or completely hydrolyzing the tetrafunctional hydrolyzable organosiloxanes as represented by $SiX_4$ (X is a hydrolyzable organic substituent, for example, an alkoxyl group), preferably resins having multiple siloxane bonds. (Herein, the compounds and the resins are especially referred to as a general term, "silicone resin-M." It is not necessary that such "silicone resin-M" is the same as the one generally known as silicone resin. The term "silicone resin-M" herein means the specific compound and the resin stated as above.) While these compounds are included in the (poly)siloxane compounds (1), when the silicone resin-M has capability of condensation by comprising a hydroxyl group linked to silicon or hydrolyzable organic substituents, they correspond to the (poly)siloxane compounds (2). In any of the embodiments, it is preferred that the coating composition comprises both fine hollow-silica particles having an average particle diameter of 5 nm to 2 $\mu$m as the fine hollow particles and the silicone resin-M, as the essential components. Also, a completely hydrolyzed compound means a compound in which hydrolyzable organic substituents are completely hydrolyzed, that is, it means tetrahydroxysilane ($Si(OH)_4$). Partially hydrolyzed compounds mean hydrolyzed compounds other than the completely hydrolyzed compound (i.e., di- or trihydroxysilanes). For such silicone resin-M, the preferred weight average molecular weight ranges from 200 to 2000, and more preferably from 600 to 1200.

In the silane compounds (1), the (poly)siloxane compounds(1) and (2), the tetrafunctional hydrolyzable organosilanes and the silicone resin-M, it is preferred that the above-described "film-like material" formed by the compounds becomes hydrophilic. For example, when the compounds are applied to a surface of a quartz glass substrate such that the paint film formed has thickness of 100 nm and dried, and are subjected to the heat treatment at 100°C, it is preferred that the "film-like material" is to be obtained as is characterized by a contact angle of water drop on the surface of the resulting hardened coating of 20° or less, preferably 10° or less.

The silicone resin-M can be obtained by using the partially hydrolyzed compounds and/or the completely hydrolyzed compound obtained by hydrolyzing the tetraalkoxysilanes as represented by $SiX_4$ (X = OR wherein R is a monovalent hydrocarbon group) in the presence of water of which an amount is such that a molar ratio of $[H_2O]/[OR]$ is 1.0 or more, for example, 1.0 to 5.0, preferably 1.0 to 3.0, and preferably in the presence of an acid or a base catalyst. Since it is easy for the partially hydrolyzed compound and/or the completely hydrolyzed compound obtained by hydrolysis, in particular, to form two dimensional cross-linking structures in the presence of an acid catalyst, the porosity of the dried coating film tends to increase under such conditions. With the molar ratio of less than 1.0, there is a risk of causing adverse effects that an amount of unreacted alkoxyl group increases and the refractive index of the coating film becomes high. To the contrary, in the case where the ratio is greater than 5.0, there are risks such that the condensation reaction proceeds extremely rapidly, and that gelation of the coating material composition takes place. In this case, the hydrolysis may be conducted under any appropriate conditions. For example, the hydrolysis can be done by mixing these materials

under stirring at a temperature of 5 to 30°C, for 10 minutes to 2 hours. Also, in order to make the molecular weight of 2000 or more, and to make the refractive index of the matrix itself smaller, the obtained hydrolyzed compounds may be reacted at 40 to 100°C, for 2 to 100 hours to yield the desired silicone resin-M.

For the silicone resin-M, in particular the silicone resin-M having the molecular weight of 2000 or more as described above, it is particularly preferred that on the basis of summed amounts (i.e., the total amount) of $SiX_4$ and water and a dilute thinner (for example, alcohols such as methanol, ethanol, propanol and the like) and other components (if present, for example, catalysts; when colloidal silica is used as the catalyst, it is silica and the like), the amount of the partially hydrolyzed compound and/or the hydrolyzed compound is to be used which is obtained by the hydrolysis of the amount of $SiX_4$ whose weight fraction is equivalent to 5 wt% or more and 20 wt% or less $SiO_2$ as solid (the amount of $SiO_2$ obtainable under the assumption that all the Si in $SiX_4$ are converted to $SiO_2$). When the amount of $SiX_4$ of less than 5.0 wt%, there is a' risk of causing adverse effects such that even though water is added in an amount as described above, the amount of unreacted alkoxysilane groups increases, and the refractive index of the resulting matrix becomes high. Conversely, in the case where the amount is greater than 20 wt%, there is a risk that even though water is added in an amount as described above, gelation of the coating material composition takes place.

In the coating material composition of the present invention, the fine hollow particles are such that the inner parts of the shells have the cavities (or voids), and any of suitable known fine hollow particles may be used. The particularly preferable hollow particles for the use are silica-based hollow particles. The average particle diameter and the refractive index thereof may be the same as described above. Concretely, the following ones can be used:

The fine hollow particles in which the inner parts of the shells comprising silica-based inorganic oxides have the cavities, can be used. The silica-based inorganic oxides mean those including (A) a silica monolayer, (B) a monolayer of the composite oxides comprising silica and an inorganic oxide other than silica, and (C) double layers of the above (A) layer and the (B) layer. The shell may be a porous material having micropores(or fine voids), or may be those whose micropores are blocked, causing the cavities to be sealed tightly against the outside of the shell. It is preferred that the shell are composed of multiple silica-based coating layers comprising the first inner silica coating layer and the second outer silica coating layer. By providing the outside with the second silica layer, it is possible to densify the shell by blocking the micropores in the shells, and further it is possible to obtain the fine hollow silica particles in which the cavities of the inner part are tightly sealed.

The thickness of the shell is in the range between 1 and 50 nm, in particular between 5 and 20 nm is preferable. When the thickness of the shells is less than 1 nm, it is likely that the fine hollow particles do not keep the given particle shape. Conversely, when the thickness of the shell is greater than 50 nm, there is a risk that the cavities in the fine hollow silica particles become small, resulting in decrease in the cavities fraction, and thus lowering of the refractive index is not sufficient. Furthermore, it is preferred that the thickness of the shell be within the range of 1/50 to 1/5 of the average particle diameter of the fine hollow particles. When the first silica coating layer and the second silica coating layer are provided as the shells as described above, it is suitable so that the sum of the thickness of these layers ranges from 1 to 50 nm, and in particular, in the densified shells, the thickness of the second silica coating layer is preferably in the range of 20 to 40 nm.

Also, in the cavities, there may be a solvent which was used when the fine hollow silica particles are prepared and/or a gas which was present when the fine hollow silica particles are dried. Furthermore, a precursor material for forming the cavities as described below may remain in the cavities. The precursor material may be attached to the shell, thereby resulting in the precursor material being present in small amounts, or the precursor material may occupy the most part of the cavities. Herein, the precursor material refers to the porous material which remains after the removal of a part of constitutional components of core particles from the core particles which are surrounded by the shell. As the core particles, porous composite oxide particles comprising silica and inorganic oxides other than the silica are used. The examples of the inorganic oxide include one or two or more of $Al_2O_3$, $B_2O_3$, $TiO_2$, $ZrO_2$, $SnO_2$, $Ce_2O_3$, $P_2O_5$, $Sb_2O_3$, $MoO_3$, $ZnO_2$, $WO_3$ and the like. The examples of two or more inorganic oxides include $TiO_2$-$Al_2O_3$, $TiO_2$-$ZrO_2$. Also, in the micropores of the porous material, the solvent or gas may be present. In this case, when the removed amount of the components constituting the core particles becomes larger, the volume of the cavities increases and the fine hollow silica particles having a low refractive index is obtained, and a transparent coating film obtained by combining the fine hollow silica particles has a low refractive index and thus a good anti-refractive property.

The average particle diameter of the fine hollow silica particles in the present invention as described above is in the range of 5 nm to 2 μm. When the average particle diameter is less than 5 nm, the effect of the cavities (or cavity) for obtaining a low refractive index is low. Conversely, when the average particle diameter is greater than 2 μm, the transparency becomes extremely poor, thereby making the contribution by Anti-Glare large. As a use for which the coating film formed by using the coating material composition of the present invention is required to have high transparency, there is a use for preventing reflection on a surface of a display and like. For this purpose, it is preferred that the particle diameter of the fine hollow silica particles is in the range of 5 to 100 nm. Also, the particle diameter as used herein is a number average particle diameter as observed by transmission electron microscopy.

A method for producing the fine hollow silica particles is described in detail in the Japanese Unexamined Patent

Application Publication No. 2001-233611 (P2001-233611A) and the fine hollow silica particles as can be used in the coating material composition of the present invention can be prepared by a person skilled in the art on the basis of the method as described in the publication.

In one embodiment of the coating material composition of the present invention, at least one is selected from the tetrafunctional hydrolyzable organosilanes as represented by the above $SiX_4$ (X is a hydrolyzable substituent), the partially hydrolyzed compounds and the completely hydrolyzed compound thereof, and the condensed compounds of these compounds (i.e., the silicone resin-M) for the matrix-forming material. Any of these materials have good dispersion stability of the fine hollow silica particles. The other metal oxide fine particles or the organic hollow fine silica particles do not always have sufficient dispersion stability, and the mechanical strength of the obtained dried coating film has a tendency to be smaller than that of the fine hollow silica particles. However, even in other metal oxide fine particles or organic hollow fine silica particles, when the outermost surface of the shells thereof is coated by a silica material, the dispersion stability and the mechanical strength of the dried coating film can be increased. This case can be suitably used for the present invention. In addition, these tetrafunctional hydrolyzable organosilanes and the materials derived from them make the refractive index of the obtained "film-like material" smaller and furthermore make the cross-linking density larger compared with the cases wherein the trifunctional hydrolyzable organosilanes, the difunctional hydrolyzable organosilanes, the partially hydrolyzed compounds and the completely hydrolyzed compound thereof, and the resin as formed by the condensation of these silanes are used as the matrix-forming material.

The tetrafunctional hydrolyzable organosilanes which are preferably used as the matrix-forming material of the coating material composition of the present invention may include tetrafunctional alkoxysilanes as represented by the following formula(2):

$$Si(OR)_4 \qquad (2)$$

The "R" of alkoxyl groups "OR" in the above chemical formula (2) is not particularly limited except that it is any one of monovalent hydrocarbon groups. The monovalent hydrocarbon groups having 1 to 8 carbon atoms are preferred. For example, alkyl groups such as methyl group, ethyl group, propyl group, butyl group, pentyl group, hexyl group, heptyl group, octyl group and the like, may be exemplified. Among the alkyl groups as contained in the alkoxyl groups, the examples of ones having three or more carbon atoms may include linear ones such as n-propyl group, n-butyl group and the like and branched ones such as isopropyl group, isobutyl group and t-butyl group and the like.

In the process for preparing the silicone resin-M by using the tetrafunctional hydrolyzable organosilanes such as tetrafunctional alkoxysilanes and the like, the tetrafunctional hydrolyzable organosilanes are hydrolyzed (hereinafter, the partial hydrolysis is also included) and condensed. Herein, although there are no particular restrictions on a weight average molecular weight of the silicone resin-M, in the coating material composition, in order to obtain a larger mechanical strength of the obtained coating film with a smaller proportion of the silicone resin-M, it is preferred that the weight average molecular weight is within the range from 200 to 2000. When the weight average molecular weight is smaller than 200, there is a risk that a performance of forming the coating film might be poor, and conversely, when the weight average molecular weight is greater than 2000, there is a risk that the mechanical strength of the coating film might be small. However, in a use wherein a large mechanical strength is not required, the molecular weight greater than 2000 is effective in order to make the refractive index of the matrix itself smaller. Moreover, the molecular weight is measured by using GPC as described below.

In general, the silicone resin-M that is obtained by hydrolyzing the tetrafunctional hydrolyzable organosilane $SiX_4$ and condensing, is polymerized (oligomerization is included) by the condensation in.the state wherein the unreacted groups in the molecule, i.e., the hydrolyzable substituent X is partially retained. When the coating film is formed by using the coating material composition of the present invention, the silicone resin-M as the matrix-forming material retains the unreacted groups in the molecule, and as a result, although the formed matrix has unreacted substituents, in the case wherein the coating film obtained by drying is subjected to heat treatment at a temperature greater than 300°C to obtain the cured coating film, the unreacted group is decomposed, and thus there is no adverse affect on the refractive index of the finally obtained cured coating film. If the heat treatment is performed at relatively low temperatures such as in the range from 50 to 300°C, for example from 50 to 150°C, particularly 50 to 120°C, the unreacted groups are not decomposed and may remain in the cured coating film, and as a result, there is a risk that the refractive index as the matrix becomes higher.

Considering this, a method in which the tetrafunctional hydrolyzable organosilanes are used as the matrix-forming material in the state that they are completely hydrolyzed rather than partially hydrolyzed, or a method in which a compound in the completely hydrolyzed state is used for preparing the silicone resin-M, which is used as the matrix-forming material, is preferred. However, when the completely hydrolyzed compound is used, since the matrix-forming material becomes generally a polymer material having the molecular weight greater than 2000, the mechanical strength of the resulting dried coating film is not always sufficient. In this case, such matrix forming material is effective in uses other than the outermost surface of a display and the like, where a large mechanical strength is not required. Since the

completely hydrolyzed compounds have only -OH group at the terminals of the molecule, when the completely hydrolyzed compounds are used to form the coating film, the only group that the coating film can have and that is retained is -OH, thereby making the surface of the coating film to have good hydrophilicity and making a contact angle of water drop on the surface small.

In use in which a particularly large mechanical strength is required, the silicone resin-M having a molecular weight ranging from 600 to 2000 is effective, and to obtain such silicone resin-M, the partially hydrolyzed compound can be used. Although the refractive index of the matrix formed from such silicone resin-M becomes larger compared with the case where the silicone resin-M obtained from the completely hydrolyzed compound is used, the dried coating film formed from the silicone resin having a low molecular weight has a tendency to have higher porosity. As a result, even though the ratio of the fine hollow silica particles/silicone resin-M condensate (i.e., binder) as contained in the coating film becomes high (therefore, even though the refractive index of the coating film becomes small), it is possible to maintain the mechanical strength of the coating film. When the silicone resin-M having the molecular weight greater than 2000, is used, regardless of the ratio of fine hollow silica particles/silicone resin M condensate, the desired mechanical strength may not be obtained.

Concretely, in the coating material composition of the present invention, when not so large mechanical strength is required, as silicone resin-M used in the matrix-forming material, it is preferable to use one which is coated onto the quartz glass substrate such that the thickness of the paint film is 100 nm, dried, and is subjected to heat treatment at a temperature of 100°C, and for which a contact angle of water drop on a surface of the resulting cured coating film is 20° or less, preferably 10° or less (the substantial lower limit is 0°). That is, if such silicone resin-M is used as the matrix-forming material, it is easy to control increase in refractive index of the cured coating film without leaving unreacted groups other than -OH group, even when the coating film is treated at a low temperature. Conversely, when the silicone resin-M is used, for which the contact angle of water drop on the surface is greater than 20°, and when the coating film is not treated at a higher temperature, it may be difficult to control increase in refractive index of the coating film. Also, when the silicone resin-M having the molecular weight of 2000 or less, is used, even if the contact angle of water drop on the surface is measured by the method described as above, the contact angle of water drop on the surface will not be 20° or less. This is due to the retention of unreacted groups in the matrix. Although the contact angle of water drop for the coating film formed by the coating material composition of the present invention varies depending on the kind of the fine hollow silica particles to be used, the kind of the silicone resin-M, the molecular weight thereof, the ratio of the fine hollow silica particles/silicone resin-M condensate, when, for example, the fine hollow silica particles are used as the fine hollow particles, and the silicone resin-M obtained by the partially hydrolyzed compounds and/or the hydrolyzed compound of the tetrafunctional alkoxysilanes as the matrix-forming material, and when the molecular weight of the silicone resin-M is greater than 2000, and also when the contact angle of water drop on the dried coating film of silicone resin-M itself is smaller than 20°, the contact angle of water drop on the cured coating film becomes 20° or less, regardless of the ratio of the fine hollow silica particles/silicone resin-M in the coating composition, and the temperature for heat treatment of the coating film. When the molecular weight of the silicone resin-M is 2000 or less, if the coating film is subjected to heat treatment at a temperature greater than 300°C under an oxidative atmosphere, the contact angle of water drop on the cured coating film is 20° or less, regardless of the ratio of the fine hollow silica particles/silicone resin-M in the coating composition. However, if the temperature for heat treatment of the coating film is lower than 300°C, unless the ratio of the fine hollow silica particles/silicone resin-M in the coating composition is 60/40 or greater, there is a tendency that the contact angle of water drop on the cured coating film may not become 20° or less.

In the coating material composition of the present invention, the amount of the fine hollow particles and the amount of the matrix-forming material to be included may be in any appropriate ratio, but generally a weight ratio 30/70 to 95/5 of the fine hollow particles to matrix-forming material (i.e., the fine hollow particles/the matrix-forming material) is preferred. For example, in case the silicone resin-M is used, when the molecular weight of the silicone resin-M is greater than 2000, it is more preferred that the ratio ranges from 30/70 to 60/40, and when the molecular weight of the silicone resin-M is 2000 or less, it is more preferred that the ratio ranges from 70/30 to 90/10.

Further, as a proportion of the fine hollow particles (for example, the fine hollow silica particles) contained in the coating film becomes higher, the refractive index of the coating film can be lower, but on the other hand, the mechanical strength of the coating film becomes lower. Therefore, it is necessary to improve the mechanical strength by using the matrix-forming matrix which is in a relatively low proportion since the proportion of the fine hollow silica particles is increased. For the purpose, when the tetrafunctional hydrolyzable alkoxysilanes or the condensable silicone resin-M derived from the above alkoxysilanes are used as the matrix-forming material (in particular, when the molecular weight of the silicone resin-M is 2000 or less) in the formation of the coating film, when these are condensed to form the matrix, its cross-linking density may be increased.

For the preparation of the matrix-forming material, when the silane compounds (1), in particular the tetrafunctional hydrolyzable organosilanes such as tetrafunctional alkoxysilanes are hydrolyzed, a catalyst may be used if necessary. Although there are no particular restrictions on the catalyst to be used, an acid catalyst (or an acidic catalyst) is preferred, considering that the resulting partially hydrolyzed compounds and/or the hydrolyzed compound are easily

converted to compounds having a two-dimensionally cross-linked structure, and the condensate compounds become easily porous, and that a time to be required to carry out the hydrolysis is shortened. Although there are no particular restrictions on such acid catalysts, mention may be made of organic acids (for example, acetic acid, chloroacetic acid, citric acid, benzoic acid, dimethylmalonic acid, formic acid, propionic acid, glutaric acid, glycolic acid, maleic acid, malonic acid, toluenesulfonic acid, oxalic acid and the like), inorganic acids (for example, hydrochloric acid, nitric acid, halogenated silane and the like), acidic sol-like fillers (for example, acidic colloidal silica, oxidized titania sol and the like). One or more of these can be used. The hydrolysis of alkoxide, if necessary (for example, when not so large mechanical strength is required), may be performed by warming. In particular, if the hydrolysis reaction is facilitated over 2 to 100 hours at a temperature of 40 to 100°C, the unreacted alkoxide groups can be reduced without any limitation, and as a result, the refractive index of the matrix material itself decreases, which is preferable. When the hydrolysis is performed in the ranges of temperature and the period other than the above-mentioned ones, there may be a risk that the unreacted alkoxide groups remain. Also, instead of the above acidic catalysts, base catalysts (or basic catalysts) including aqueous solutions of hydroxides of alkaline metals or alkaline earth metals, such as sodium hydroxide, potassium hydroxide and the like, ammonia water, and aqueous solutions of amines and the like, may be used. However, when the base catalysts are used, a three-dimensional cross-linking is easily formed, and as a result, the porosity of the dried coating film becomes low and gelation also easily occurs. Accordingly, the use of the acid catalysts is preferred. When the coating material composition of the present invention has hydrolyzable substituents as the matrix-forming material, and such hydrolysis catalysts can be included therein.

The coating material composition of the present invention comprises the above fine hollow particles, preferably the fine hollow silica particles, and the above matrix-forming material. Also, it is preferred that the coating material composition comprises water or a mixture of water with liquids other than water, since the coating material composition is applied on the substrate to form the paint film and in some cases it is preferred at least partial hydrolysis of the matrix-forming material takes place. Examples of such other liquids include hydrophilic organic solvents of which examples include lower aliphatic alcohols such as methanol, ethanol, isopropanol (IPA), n-butanol, isobutanol and the like; ethylene glycol derivatives such as ethylene glycol, ethylene glycol monobutyl ether, ethylene glycol monoethyl ether acetate and the like; diethylene glycol derivatives such as diethylene glycol, diethylene glycol monobutyl ether and the like, and diacetone alcohol and the like. Also, one or two or more selected from these may be used. Furthermore, in combination with these hydrophilic organic solvents, one or two or more selected from toluene, xylene, hexane, heptane, ethyl acetate, butyl acetate, methyl ethyl ketone, methyl isobutyl ketone, methyl ethyl ketoxime and the like may be used.

In the coating material composition of the present invention, the matrix-forming material may be classified by the following three embodiments (a), (b) and (c):

(a) In one embodiment, the matrix-forming material is the above-mentioned silane compounds (1) (preferably, the tetrafunctional hydrolyzable organosilanes, more preferably, the tetrafunctional alkoxysilanes). In this case, the silane compounds (1) are condensed to form the matrix in the presence of water, during time in which the coating material composition is prepared and/or during time in which after the preparation the coating material composition is applied to the substrate and the paint film is dried. Also, the "preparation" means that the components of the coating material composition are combined and mixed.

(b) In another embodiment, the matrix-forming material is the (poly) siloxane compounds (2) (preferably, the condensable silicone resin-M). In this case, the (poly) siloxane compounds (2) are condensed in the presence of water to form the matrix, during time in which the coating material composition is prepared and/or during time in which after the preparation the coating material composition is applied to the substrate and the coating film is dried. Also, a degree of condensation is smaller than that in the above embodiment in which the silane compound (1) is included as the matrix-forming material.

(c) In further another embodiment, the matrix-forming material is the (poly)siloxane compound (1) (preferably, the silicone resin-M), and this compound are compounds which substantially have neither hydroxyl groups nor hydrolyzable substituents. In this case, the (poly)siloxane compounds (1) are applied to the substrate and the paint film is dried to form the porous matrix without condensation, during time in which the coating material composition is prepared and after the preparation.

The coating film obtained by the coating material composition of the present invention has the fine hollow particles and the porous matrix, and the porosity of the coating film is in the range between 10 and 95%, preferably 30 and 80%, more preferably 40 and 60%. When the porosity is particularly large, the coating film having a particularly low refractive index can be formed. In the preparation of the coating material composition, the porosity having the ranges mentioned above can be accomplished by varying formulations of preparation of the fine hollow particles and the matrix forming material to be combined. Herein, the porosity is the one for which species of elements and average proportions of the elements which are present as a solid in the coating film are measured by XPS (X-ray · photoelectron · spectroscopy), and from which proportions true density of the solid portion, ds, is calculated. In addition, hydrogen having a small atomic

weight is not detected, and thus may be disregarded. Also, the thickness of the coating film is measured with an ellipsometer, and the weight of the coating film is further calculated. To reduce the measurement error, it is preferred that the substrate is aluminum foil, the size of the substrate is a rectangular form of about 300 mm, and the thickness of the coating film to be formed is about 1 μm. An apparent volume of the coating film is calculated from the thickness and the area of the coating film, and an apparent density of the coating film, df, is calculated from the weight and apparent volume of the coating film. The porosity is calculated on the basis of the following equation:

$$ds \times (1 - porosity/100) = df$$

Also, if necessary, the porosity can be varied by adding other components.

Moreover, when the coating material composition of the present invention comprises the matrix-forming material in the above (a) and (b) embodiments, it is preferred that it comprises a curing catalyst to cross-link the matrix-forming material. Consequently, when the coating material composition is applied to the substrate to form the paint film and then dried, there is an effect of facilitating the condensation reaction, thereby increasing the cross-linking density in the coating film, and increasing the resistance of the coating film to water and alkali. Examples of such curing catalyst include metal chelate compounds (for example, Ti chelate compounds, Zr chelate compounds and the like), organic acids and the like. The metal chelate compounds are particularly advantageous when the matrix-forming matrix is prepared by using the tetrafunctional alkoxysilanes as raw materials.

A particularly preferred curing catalyst is organic zirconium, and using the catalyst is particularly preferable in view of the effect of the curing catalyst as mentioned above. The organic zirconium is not particularly limited but includes, for example, one as represented by a general formula $ZrO_nR^2_m(OR^1)p$ (wherein m and p are respectively an integer of 0 to 4, and n is 0 or-1, and 2n + m + p = 4) and the functional group ($R^1$) of the alkoxyl group ($OR^1$) in the formula is the same as those in the formula(2). Also, examples of $R^2$ include $C_5H_7O_2$ (acetyl acetonate complex) and $C_6H_9O_3$ (ethyl acetoacetate complex). $R^1$ or $R^2$ may be same as or different from each other in one molecule. In particular, when at least any one selected from $Zr(OC_4H_9)_4$, $Zr(OC_4H_9)_3(C_5H\text{-}_7O_2)$ and $Zr(OC_4H_9)_2$ $(C_5H_7O_2)$ $(C_6H_9O_3)$ are used as the organic zirconium, the mechanical strength of the coating film can be much more improved. When the coating material composition is used to form the coating film wherein the coating material composition has a small proportion of the (poly) siloxane compounds (2) (for example, the silicone resin-M obtained by condensing the tetrafunctional hydrolyzable alkoxysilanes) to the fine hollow silica particles, there is a case that the mechanical strength of the coating film is not sufficient. However, the addition of the organic zirconium makes it possible to increase the mechanical strength of the coating film. Also, the hardened coating film obtained by the process in which the coating material composition is applied to the substrate, dried at a relatively low temperature of 100°C, and then subjected to heat treatment at that temperature, has a strength which is typically identical with the coating film which is obtained without adding the organic zirconium and is subjected to a high temperature greater than 300°C.

Also, the addition amount of the organic zirconium is preferably 0.1 to 10 wt% calculated as $ZrO_2$, on the basis of total solid amount of the coating material composition. When the addition amount is less than 0.1 wt%, there may be a risk that the effect due to the organic zirconium is not shown, and conversely, when the amount is greater than 10 wt%, the coating material composition is gelated, or the coagulation or the like may take place. Also, the solid content is in the weight percentage of the heating residue on the basis of the total amount of the coating material composition, and this heating is performed at a temperature of 300°C or more (generally may be 300°C) under an oxygen atmosphere. When the fine hollow particles are the fine hollow silica particles and the matrix-forming material is the silicon compounds, in the case when a heating residue is produced from the two materials, an amount of the solid content may be determined from a feeding weight of the fine hollow particles and a calculated weight on the basis of the weight of the condensation compound of the matrix-forming compound (for example, in the case of the tetraalkoxy silanes, weight of existing Si is calculated as $SiO_2$, in the case of the trialkoxy silanes, weight of existing Si is calculated as $SiO_{1.5}$).

The coating material composition of the present invention is preferred when it includes fine particles that are not hollow, for example, silica particles (here in after, simply it is referred to as "silica particles"). To make such particles coexist is able to increase the mechanical strength of the formed coating film, and furthermore, to improve surface smoothness and crack resistance of the coating film.

The form of the silica particles is not particularly restricted, but for example, may be a powder-like form, of a sol-like form. When the silica particles are used in the sol-like form, i.e., as colloidal silica, although there is no particular limitation, for example, the colloidal silica which is dispersed in the hydrophilic organic solvent such as alcohol or water-dispersed colloidal silica may be used. In general, such colloidal silica contains 20 to 50 wt% of silica as a solid content and the compounding amount of the silica can be determined from this value.

Herein, when the water-dispersed colloidal silica is used, the water which is present as one other than the solid content in the colloidal silica, can be used in the hydrolysis of silane compounds (1), for example, the tetrafunctional

hydrolyzable organosilanes. Accordingly, when determining the amount of water in the hydrolysis, it is necessary to add the amount of water of the water-dispersed colloidal silica. The water-dispersed colloidal silica is generally one which is-prepared by water glass, and it is possible to use a commercially available product.

Also, organic solvent-dispersed colloidal silica can be easily prepared by replacing the water of the water-dispersed colloidal silica with an organic solvent. Such organic solvent-dispersed colloidal silica is also commercially available as well as the water-dispersed colloidal silica. In the organic solvent-dispersed colloidal silica, kind of the organic solvents in which the colloidal silica is dispersed is not particularly limited, but may includes hydrophilic organic solvents, for example, lower aliphatic alcohols such as methanol, ethanol, isopropanol (IPA), n-butanol, isobutanol and the like; ethylene glycol derivatives such as ethylene glycol, ethylene glycol monobutyl ether, ethylene glycol monoethyl ether acetate and the like; diethylene glycol derivatives such as diethylene glycol, diethylene glycol monobutyl ether and the like, and diacetone alcohol and the like. Also, one or two or more selected from these can be used. Furthermore, in combination with these hydrophilic organic solvents, one or two or more selected from toluene, xylene, hexane, heptane, ethyl acetate, butyl acetate, methyl ethyl ketone, methyl isobutyl ketone, methyl ethyl ketoxime and the like may be used.

Also, an addition of the fine non-hollow particles, i.e., one in which the inner parts of the shells are not hollow, for example, the above silica particles, is preferably 0.1 to 30 wt% on the basis of the total solid content amount in the coating material composition. When the amount is less than 0.1 wt%, there may be a risk that the effect due to the addition of the silica particles is not shown, and conversely, when the amount is greater than 30 wt%, there may be a risk of an adverse effect that the refractive index of the coating film becomes high.

Also, since the coating material composition forms the coating film having a low refractive index, the coating film may be colored. In this case, when a colorant compound (pigment or dye) is previously included in the coating material composition, the color of the coating film can be controlled. As the colorant compound, there is no limitation on inorganic or organic one, and a commercial product may be appropriately added to obtain the desired color in the range which does not affect the refractive index of the coating film.

The coating material composition of the present invention further may comprise a silane coupling agent. When the coating material composition of the present invention is used to form the coating film on the substrate, adhesion between the substrate and the coating film increases by incorporating the silane coupling agent. Also, the silane coupling agent has the effect that the water-repellent property is also provided to the surface of the dried coating film, in particular, the hardened coating film. To provide the surface of the dried coating film, in particular, the hardened coating film with the water-repellent property, particularly preferable silane coupling agent is that which includes fluorine atoms, which is so called the fluorine based silane coupling agents. However, since the effect for increasing the adhesion between the substrate and the coating film cannot be expected of the silane coupling agent which contains fluorine atoms, it is preferable to use the fluorine based silane coupling agents in combination with silane coupling agents other than the fluorine-based ones. The main purpose of using the fluorine based coupling agents in the coating material composition is to provide the surface of the coating film with the water-repellent property, and thus it is preferred that the agent is not copolymerized with the matrix-forming material, and it is preferred that the fluorine-based coupling agents are transferred to and oriented on the surface, without any copolymerization when forming the coating film, and that it is condensed to the surface of the coating film when forming the coating film.

The concrete examples of the preferable silane coupling agent include the following:

$CF_8CF_2CH_2CH_2Si\ (OCH_3)_3$

$C_2F_7\text{-}\ (OCF_2CF_2CF_2)_{24}\text{-}\ (OCF_2)\ _2\text{-}CH_2CH_2\text{-}\ (OCH_3)\ _a$

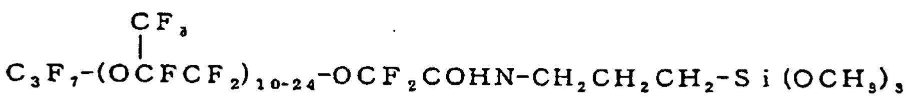

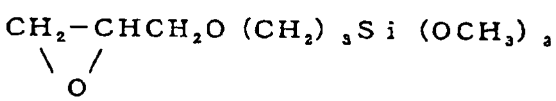

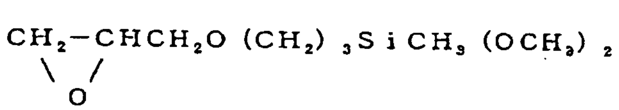

In particular, the last two silane coupling agents increase the adhesion.

The coating material composition of the present invention may also include photosemiconductor fine particles. Although the photosemiconductor in a photoresponsive type, for example, in a UV light-response type, so called photocatalysts are excited by photoirradiation, and the active species such as active oxygen and the like are generated, since active species have a very strong oxidation power, the effect that organic stains (for example, finger prints consisting of "generally oleic acid") which adhere to the surface of the coating film can be decomposed and removed (the so-called anti-pollution action or "self-clean" effect), is provided. Also, such photosemiconductors provide the surface of the coating film with super-hydrophilic property by forming -OH groups on the surface. The latter effect has an advantage that the antistatic function (the function which make it difficult to adhere the dust and the soil) is imparted to the surface of the coating film. When the coating material composition includes photosemiconductor particles, such effect can be provided on the surface of the coating film.

Particularly preferable photosemiconductor particles include fine semiconductor particles of visible light responsive photosemiconductors , which are fine particles of semicondictor materials that are so called visible light responsive photocatalysts (for example, metal doped $TiO_2$ and the like, oxygen-deficient $TiO_2$, rutile-type $TiO_2$, nitrogen-substituted $TiO_2$ and the like). In this case, the anti-pollutant effect and anti static function are provided by an indoor illumination light or a luminescence from the inside of a display in the case of the display. An addition amount is not particularly limited, but the appropriate photosemiconductor kinds and the amounts may be selected so that the required anti-pollutant level, antistatic level can be obtained. Since generally the photosemiconductor materias are materials having a high refractive index, the use of these materials increase the refractive index of the coating film, thus a smaller amount being preferred. In a case where the refractive index of the coating film increases extremely by the addition of required amount of the photosemiconductor materials in order to obtain the sufficient anti-pollutant level and the antistatic level, techniques such as changing the shape of the photosemiconductor fine particles to a hollow shape are needed.

Also, if photosemiconductor fine particles are added, it is preferred that the matrix is formed from the silicone resin-M and that it is selected from perfluororesins, and in either case it is preferred that the content of elements Si or F is large. This is because, due to the cleavage effect of photosemiconductor the bonds other than Si- and F- are broken, and the ability as the binder is deactivated. Conversely, when the silicone resin-M is used as the matrix-forming material, by incorporating organic functional groups composed mainly with the C-C bonds which is easily decomposed by the cleavage effect of the photosemiconductor into the matrix-forming material, it is possible to decrease the refractive index of the hardened coating film.

The coating material composition of the present invention may further include a porous filler. Such filler may be of any type of form, for example, hollow forms, ones having micropores, ones having macropores and the like. Materials for the filler are not particularly limited, but for example, may be organic ones. Concretely, the filler may be fillers made of carbon-based, fluorine-based materials. As such fillers are added to the coating material composition, fillers which decrease the refractive index of the resulting coating film are preferred, and fillers with a structure which causes such effect are preferred. Concretely, fillers such as the fine hollow particles comprising the outer shells of the organic materials {for example, fluorine based materials, specifically, PTFE (tetrafluoroethylene resin), PFA (tetrafluoroethylene-perfluoroalkoxy-ethylene copolymer resin), FEP (tetrafluoroethylene-hexafluoropropylene copolymer resin), ETFE (ethylene-tetrafluoroethylene copolymer), PCTEE (polychlorotrifluoroethylene copolymer), ECTFE (ethylene-chlorotrifluoroethylene copolymer), PVDF (polyvinylidenefluoride), PVF (polyvinylfluoride) and the like}, silica aerogel particles, mesoporous silica particles, carbon nano-tubes and the like, are exemplified.

In view of decreasing the refractive index of the resulting coating film, the coating material composition of the present invention may further include fillers made of metal fluorides. Concretely, the fillers such as $CaF_2$, NaF, $MaF_2$ and the like, may be mentioned. Also, when the matrix-forming materials comprise the silicone resin-M (particularly, the partially hydrolyzed compounds or the hydrolyzed compounds of the tetrafunctional alkoxy silanes), it is more preferable that surfaces of the metal fluoride fillers are coated by silica in order to further increase dispersibility of the fillers and the mechanical strength of the hardened coating film,.

The coating material composition of the present invention may further include an electrically conductive material. Such electrically conductive material may be in any form, and for example, may be fine particles, fibers, whiskers and the like. The preferred electrically conductive material is that with an antistatic function, an absorption function of electromagnetic waves and the like. Examples of the electrically conductive material include, for example, metals such as Ag, Pt, Cu, and Ni, metal oxides such as ITO (tin-doped indium oxide), ATO (antimony-doped tin oxide), $ZnSb_2O_6$, $SnO_2$, $TriO_{2-x}$, (x is a number of greater than 0, less than 2) and the like, carbon based materials such as carbon black, graphite and the like. As the electrically conductive material is incorporated, the inherent functions of the electrically conductive material is added to the substrate on which the coating material composition is applied. For use in which color correction is required (for example, optical filter for PDP), the color correction function can also be given at the same time. Furthermore, as conductive metal oxides have an infrared screening function, it is possible to provide the antistatic function, the absorption function of the electromagnetic waves, the color correction function, and the infrared screening function at the same time. The addition amount of the conductive material is not particularly limited. However, as in the case of

the photosemiconductors, since the conductive material generally has a high refractive index, it has a tendency to increase the refractive index of the coating film, thereby addition of a smaller amount is preferred. When the refractive index of the coating film increases extremely by the addition of required amount of the photosemiconductor materials in order to bring out sufficiently the anti-pollutant function and the antistatistic function, additional techniques such as changing the shape of the photosemiconductor materials to a hollow shape are needed.

Also, to the coating material composition of the present invention, if necessary, a leveling agent or a viscosity adjusting agent can be added.

And, the coating material composition according to the present invention can be obtained, wherein the fine hollow particles are added to the matrix-forming materials such as silicone resin-M, and further, if necessary, the above other components may be added. In this case, in the coating material composition, a weight ratio of other solid content is not particularly limited, but it is preferred that the sum of solid content of the fine hollow silica particles and matrix materials/other solid content in the range between 99/1 and 70/30, more preferably 99/1 and 80/20. When the other solid content is more than 30, there is a risk that it is difficult to obtain the mechanical strength of the coating film. Also, the other solid content means the amount obtained by subtraction of the solid content on the basis of the sum of solid content of the fine hollow silica particles and the matrix material from the above-mentioned solid content.

Also, the coating material composition obtained as described above, may be diluted using an organic solvent or water; if necessary, and in preparation of the coating material composition, each of the components may be previously diluted using an organic solvent or water and the like, if necessary. These may be called as a dilution thinner. Kind of the organic solvent to dilute is not particularly limited but may include, for example, lower aliphatic alcohols such as methanol, ethanol, isopropanol (IPA), n-butanol, isobutanol and the like; ethylene glycol derivatives such as ethylene glycol, ethylene glycol monobutyl ether, ethylene glycol monoethyl ether acetate and the like; diethylene glycol derivatives such as diethylene glycol, diethylene glycol monobutyl ether and the like, and diacetone alcohol and the like. Also, one or two or more selected from these can be used. Furthermore, in combination with these hydrophilic organic solvents, one or two or more are selected from toluene, xylene, hexane, heptane, ethyl acetate, butyl acetate, methyl ethyl ketone, methyl isobutyl ketone, methyl ethyl ketoxime and the like.

The coating material composition as prepared above can be applied to the substrate to form the paint film, which is dried to the coating film having a low refractive index, and accordingly the article on the surface of which the coating film having a low refractive index, i.e., the coated product, is obtained. When the coating film is formed as described, the coating film having a larger area than those obtained by the gas phase or liquid phase method, can be obtained, and the speed for forming the coating film can be higher.

The substrates which form the coating film by the coating material composition, are not particularly limited, but may include, for example, the inorganic substrates as represented by glass; metal substrates; organic substrates as represented by polycarbonate or polyethyleneterephthalate, acrylic resin, fluorine resin, triacetyl cellulose, polyimide resin and the like. It does not matter whether forms of the substrates may include plate-like or film-like form. It does not matter whether such substrates may be a single substrate or a laminate of different kinds of materials. Furthermore, at least one of other layers may be previously formed on the surface of the substrate. For example, as the other layers, an ultraviolet light curable hardcoat layer, an electron beam curable hardcoat layer, a heat curable hardcoat layer and the like may be mentioned. A material of the hardcoat layer is largely classified by organic resins as represented by acrylic resins, urethane resins and silicone based resins. Also, by adding the antistatic agents and the colorant agents and the like to the hardcoat layer, the electromagnetic wave shielding function, the antistatic function, an infrared light screening function, and the color correction function can be given. By addition of large-sized particles (1 $\mu$m or more) into the hardcoat layer, an AG (anti-glazing) function can be given also. When the refractive index of the hardcoat layer increases, since difference in the refractive index between the hardcoat layer and the hardened coating film having a low refractive index which is formed thereon becomes larger, the lower reflective index and higher transparency can be accomplished. Needless to say, the addition of the antistatic agents and the colorant agents to the substrate film makes it possible to provide the substrate film with the same type of function.

Also, in the coating material composition of the present invention, when the silicone resin-M (in particular, the partially hydrolyzed compounds or the hydrolyzed compounds of the functional alkoxy silanes) is used as the matrix-forming material, the silane coupling agents, the metal oxides (in particular, $SiO_2$) fine particles are preferably incorporated into a layer which is just below the coating film in order to improve-adhesion to the hardened coating film. Of course, it is needless to say that when the binder component in the layer which is just below the coating film is the silicon based resin, the adhesion is improved.

Also, it does not matter whether one or more layers are formed on the coating film formed by the coating material composition of the present invention. Concretely, so as to provide a surface with an anti-pollutant property (water-repellent property: easy cleaning), the water-repellent layer formed by water-repellent treatments including fluorine treatment, water-repellent silicone treatment and the like, may be mentioned. The water-repellent treatments include a method in which a fluorine-based coupling agent or silicone-based coupling agent is applied, and a method in which it is deposited by vapor deposition. In either case, it is required that thickness of the water-repellent layer is less than 50

nm in order not to affect reflection and light transmission properties of the water-repellent layer. Also, to provide the surface with the anti-pollutant property (decomposability, i.e., self clean function), the coating layer having the photosemiconductor may be formed, and methods for forming this may include liquid coating method, vacuum vapor deposition method, sputtering method, and CVD method. In this case, it is required that the thickness of the water-repellent layer is less than 50 nm in order not to affect the reflection and the light transmission properties.

Also, to increase light transmission of a transparent electrode, there is a preferred case wherein the coating film by the coating material of the present invention is formed between the transparent electrode and the substrate. In general, the transparent electrode includes ITO and IZO, and a method for forming this may be any one of vapor deposition, sputtering, application (the application of the coating material composition wherein the ITO or IZO particles are dispersed in the binder). In this case, there is no limitation on thickness of the transparent electrode, and according to use of the transparent electrode, the thickness may be selected so that a required resistance value is obtained.

Furthermore, by forming a layer having a high refractive index on the coating film formed by the coating material composition of the present invention, a film with increased reflection (i.e., the film on which the light reflection is high) may also be formed. On a variety of reflection plate substrate, the coating film formed from the coating material composition of the present invention and the layer having the high refractive index are laminated stepwise, thereby the outermost surface becomes one having the high refractive index, consequently the film with increased reflection is formed.

In the application of the coating material composition to the substrate, it is preferred that the surface of the substrate is previously rinsed (washed or cleaned) so that the coating film is uniformly formed or that the adhesion of the coating film to the substrate increases. As the pre-rinsing method, alkaline rinsing, ammonium fluoride rinsing, plasma rinsing (including reduced pressure plasma and atmospheric plasma), UV ozone rinsing, cerium oxide rinsing, corona discharge and the like, may be included.

Also, methods for the application of the coating material composition to the substrate are not particularly limited. For example, many conventional coating methods including brush coating, spray coating, soaking (dip coating), roll coating, gravure coating, microgravure coating, flow coating, curtain coating, knife coating, spin coating, table coating, sheet coating, laminating coating, die coating, bar coating, reverse coating, cap coating and the like, and a method for applying the coating material composition to make pattern using an inkjet coater, and the like may be selected.

After the drying of the coating film formed on the surface of the substrate, it is preferred that the heat treatment is performed thereto. By such heat treatment, the mechanical strength of the coating film can be further increased. The temperature of the heat treatment is not particularly limited. Also, in the specification of the present application, the coating film after the heat treatment is called as "hardened coating", meaning the coating film which is hardened.

In the coating material composition of the present invention, the dilution thinner is used together with the fine hollow particles and the matrix-forming material, and the coating material composition is applied on the substrate to form the paint film and this is dried to the coating film having siloxane bonds, and then by heat treatment under the oxidative atmosphere unnecessary substituents and the like can be removed to form the coating film which is substantially composed of $SiO_2$ (with the refractive index of 1.47). Also, by such heat treatment, the stability of the matrix increases and the mechanical strength increases and also the region in which the substituents were previously present can be transformed to micropores. Furthermore, the heat treatment shortens time to reach the final mechanical strength.

Such heat treatment is required to be processed at a high temperature of 300°C or more for certain silicon compounds, and the heat treatment at a lower temperature than that cannot lower the refractive index down to 1.47, since unreacted groups in the hardened coating film, for example, alkoxide group may remain. However, in different silicon compounds as described below, even in a heat treatment at a relatively low temperature, for example from 100 to 300°C, for example, the amount of remaining groups is extraordinarily low and the refractive index of 1.47 or values close to it, or 1.47 or less can be accomplished.

For example, when the coating material composition wherein the silicone resin-M formed by the tetrafunctional alkoxy silanes is used as the matrix-forming material, is used to form the coating film, the heat treatment is carried out at a lower temperature, preferably 100 to 300°C, more preferably 50 to 150°C, for 5 to 30 minutes. Even when the heat treatment is carried out at a low temperature as described above, the mechanical strength is substantially the same as when the treatment is carried out at higher temperatures, and thus, in this case, cost for preparing the coating film can be saved. Also, unlike in the heat treatment at higher temperatures, the kinds of the substrates are not limited. Moreover, since, for example, the heat conductivity of the glass substrate is low, it takes time to increase and decrease the temperature of the system, and speed of the treatment becomes slower when the heat treatment is performed at higher temperatures. On the other hand, in the heat treatment at the low temperature, a faster treatment speed can be obtained.

Also, the thickness of the coating film which is formed on the surface of the substrate can be appropriately selected, depending on the use and the purpose of the use and the like, and is not particularly limited, but the range between 0.01 and 10.0 μm is preferred, and in order to inhibit occurrence of a crack in the coating film, the range between 0.01 and 0.5 μm is more preferred.

And, when the coating material composition according to the present invention is used, the coating film having a low refractive index can be easily formed. Although the refractive index is varied depending on the kinds and the

amounts of the materials used, the refractive index of the coating film by the coating material composition of the present invention is generally in the range between 1.10 and 1.40, and preferably between 1.25 and 1.35. For example, in the coating material composition wherein the fine hollow silica particles having a thickness in the range between 5 to 10 nm of the outer shells and the average diameter in the range between 30 and 100 nm is used as the fine hollow particles (the outer shells material: silica), and wherein the tetrafunctional silicone resin-M is used as the matrix-forming material, the refractive index of the hardened coating can be for example in the range between 1.10 and 1.40, preferably between 1.10 and 1.35, and more preferably between 1.20 and 1.30.

The coating film which can be formed by the coating material composition of the present invention is suitable for use for preventing the reflection. For example, when the refractive index of the substrate is 1.50 or less, a coating film having a refractive index of 1.50 or more is formed on the surface of the substrate, and this is used as the intermediate layer. Further, on the surface of the intermediate layer, it is effective to form the coating film by the coating material composition according to the present invention can be formed. The coating film for forming the intermediate layer, can be formed by using publicly known materials having a high refractive index, and when the refractive index of the intermediate layer is greater than 1.50, the difference in the refractive index between this and the coating film by the coating material composition according to the present invention increases, which make it possible to obtain the antireflective substrate having a good antireflective property. Also, to relieve the discoloration of the coating film of the antireflective substrate, the intermediate layer may be formed with multiple layers having a different refractive index each. Examples of the use for preventing reflection may include, displays (the outermost surface thereof, optical filters, protecting filters and the like), a variety of lenses, car mirrors and glasses (side mirrors, front glasses, side glasses, inner surfaces of rear glasses and the like), other kinds of glasses for car, glasses as building materials, screens and the like. Accordingly, the present invention provides articles having the coating film formed by the coating material composition of the present invention as the coated product.

Also, as special uses for preventing reflection, when formation of semiconductor circuits, formation of color filters, formation of patterns of transparent electrodes and the like are performed, photolithography is conventionally used, but to form finer patterns, ultraviolet laser is used as a light source. Since reflected light of the ultraviolet laser exerts an adverse effect on micro-patterning, an antireflective film is needed. The coating film formed by the coating material composition of the present invention can be applied, and since the fine hollow silica particles and the silicone resin-M as the matrix material do not have absorbance in the ultraviolet region, such coating film is effective for forming a good micro-pattern.

Also, the coating material composition according to the present invention is applied to the transparent substrate such as glass and the like to form a coating film having a low refractive index. By forming the transparent electrode layer as represented by ITO on the formed surface of the coating film, it is possible to form elements such as an LED back light for liquid crystal displays, an organic EL (electroluminescence) back light, an inorganic EL back light, or a fluorescent light emitting element and the like, which have a good light discharge efficiency (or external efficiency). Accordingly, the present invention provides the elements having the coating film formed by the coating material composition of the present invention as the coated product.

Also, the coating material composition according to the present invention is applied to the transparent substrate such as glass and the like to form a coating film having a low refractive index, which can be used in use for increasing transmission efficiency or reflection efficiency of the light which transmits to the substrate. Examples of such use may include a substrate for a touch panel, a back light unit part (for example, light guide panel, cold cathode tube, reflection sheet and the like), a brightness enhancing film for liquid crystal (for example, prism, semi-permeable film and the like), an outermost surface element of a solar cell, an illuminating lamp, a reflective lens, an LCD color filter, a variety of reflective plate, an amplifying laser light source and the like. Accordingly, the present invention provides articles having the coating film formed by the coating material composition of the present invention as the coated product.

EFFECTS OF THE INVENTION

As described above, the coating material composition of the present invention comprises the fine hollow particles and the matrix-forming material which in turn forms the porous matrix. Thus it is possible to decrease the refractive index of the coating film formed by applying the composition on the substrate and drying. In particular, when the matrix-forming material of this invention comprises the silicone resin-M obtained from the partially hydrolyzed compound and/or the hydrolyzed compounds of the tetrafunctional hydrolyzable organosilanes as represented by $SiX_4$ (X being the hydrolyzable substituent) and the fine hollow silica particles of the average diameter of 5 nm to 2$\mu$ m having the cavities inside in the shell thereof, then the refractive index of the coating film can be decreased, and at the same time, when the matrix is formed by such silicone resin-M, even without heat treatment of the coating film, the mechanical strength due to the low temperature treatment can be ensured.

EXAMPLES

Hereinafter, the present invention is specifically described by examples. In the examples, all of the designation "part" indicates "part by weight", "%" represents "weight %", except for the total light transmission, refractive index and haze rate, as described below, unless specifically defined. And, the weight average molecular weight was measured by means of GPC (gel permeation chromatography) using a measuring instrument, HLC8020 (Tosoh Corporation) as a converted value based on a calibration curve made using standard polystyrene.

EXAMPLE 1

356 parts of methanol were added to 208 parts of tetraethoxysilane, and further 18 parts of water and 18 parts of 0.01 N aqueous hydrochloric acid solution ("$H_2O$"/"OR" = 0.5) were added thereto, and this was thoroughly mixed using a disperser to obtain a mixed solution. This mixed solution was stirred for 2 hours in a constant temperature bath at 25°C whereby the weight average molecular weight was controlled to become 850, to obtain a silicone resin-M (A) as a matrix-forming material.

Then, as fine hollow silica particles, fine hollow silica IPA (isopropanol) dispersed sol (solid content: 20 wt%, the average first particle diameter: 35 nm, the thickness of shell: about 8 nm, manufactured by Shokubai Kasei Kogyo K.K.) was used, and this was added to the silicone resin-M (A), and then mixed so that the fine hollow silica particles/ silicone resin-M (calculated as condensed compound) had a weight ratio of 70/30 on the basis of solid content, and thereafter, these were diluted with methanol so that the solid content became 1%, thereby a coating material composition of the present invention was obtained.

The coating material composition was left for 1 hour, and then, it was applied to a surface of soda-lime glass (thickness: 1 mm, top surface (which was not contacted with melt tin in the floating method), refractive index: 1.54), which was polished and rinsed in advance with cerium oxide fine particles, with a wire bar coater, to form a paint film having a thickness of about 100 nm, and further it was left and dried for 1 hour to obtain a coating film, and the resulting coating film was subjected to heat treatment at 200°C, for 10 minutes under oxygen atmosphere to obtain a hardened coating.

EXAMPLE 2

A coating material composition was prepared in the same manner as in Example 1 except that the fine hollow silica particles/silicone resin-M (calculated as condensed compound) was combined so as to have a weight ratio of 80/20 on the basis of solid content.

And, the coating material composition was applied and dried, and then subjected to heat treatment to obtain a hardened coating, in the same manner as in Example 1.

EXAMPLE 3

A coating material composition was prepared in the same manner as in Example 1 except that the fine hollow silica particles/silicone resin-M (calculated as condensed) was combined so as to have a weight ratio of 90/10 on the basis of solid content.

And, the coating material composition was applied and dried, and then subjected to heat treatment to obtain a hardened coating, in the same manner as in Example 1.

EXAMPLE 4

A coating material composition was prepared in the same manner as in Example 1 except that fine hollow silica IPA (isopropanol) dispersed sol (solid content; 20 wt%, the average first particle diameter: about 60 nm, the thickness of shell: about 15 nm, manufactured by Shokubai Kasei Kogyo K.K.) was used as the fine hollow silica particle component, and that the fine hollow silica particles/silicone resin-M (calculated as condensed compound) was combined so as to have a weight ratio of 80/20 on the basis of solid content.

And, the coating material composition was applied and dried, and then subjected to heat treatment to obtain a hardened coating, in the same manner as in Example 1.

EXAMPLE 5

A coating material composition was prepared in the same manner as in Example 1 except that fine hollow silica IPA (isopropanol) dispersed sol (solid content: 20 wt%, the average first particle diameter: about 15 nm, the thickness

of shell: about 3 nm, manufactured by Shokubai Kasei Kogyo K.K.) was used, and that the fine hollow silica particles/ silicone resin-M (calculated as condensed compound) was combined so as to have a weight ratio of 80/20 on the basis of solid content.

And, the coating material composition was applied and dried, and then subjected to heat treatment to obtain a hardened coating, in the same manner as in Example 1.

EXAMPLE 6

A coating material composition was prepared in the same manner as in Example 1 except that fine hollow silica IPA (isopropanol) dispersed sol (solid content: 20 wt%, the average first particle diameter: about 50 nm, the thickness of shell: about 5 nm, manufactured by Shokubai Kasei Kogyo K.K.) was used as the fine hollow silica particle component, and that the fine hollow silica particles/silicone resin-M (calculated as condensed compound) was combined so as to have a weight ratio of 80/20 on the basis of solid content.

And, the coating material composition was applied and dried, and then subjected to heat treatment to obtain a hardened coating, in the same manner as in Example 1.

EXAMPLE 7

A coating material composition was prepared in the same manner as in Example 2 except that as an organic zirconium component $Zr(OC_4H_9)_3(C_5H_7O_2)$ was further added to give 1 wt% $ZrO_2$ in a converted solid content on the basis of the total solid content of the coating material composition.

And, the coating material composition was applied and dried, and then subjected to heat treatment to obtain a hardened coating, in the same manner as in Example 2.

EXAMPLE 8

A coating material composition was prepared in the same manner as in Example 1 except that the fine hollow silica particles/silicone resin-M (calculated as condensed compound) was combined so as to have a weight ratio of 80/15 on the basis of solid content, and that further silica methanol sol (trade name: MA-ST, manufactured by Nissan Kagaku Kogyo K.K., the average particle diameter: 10 to 20 nm) as fine silica particles which did not have cavities inside of the shell thereof, was added to give 5% $SiO_2$ in a converted solid content on the basis of the total solid content of the coating material composition.

And, the coating material composition was applied and dried, and then subjected to heat treatment to obtain a hardened coating, in the same manner as in Example 1.

EXAMPLE 9

A coating material composition was prepared in the same manner as in Example 8 except that as the organic zirconium component $Zr(OC_4H_9)_3(C_5H_7O_2)$ was further added to give 1 wt% $ZrO_2$ in a converted solid content on the basis of the total solid content of the coating material composition.

And, the coating material composition was applied and dried, and then subjected to heat treatment to obtain a hardened coating, in the same manner as in Example 8.

EXAMPLE 10

356 parts of methanol were added to 208 parts of tetraethoxysilane, and further 126 parts of water and 18 parts of 0.01 N aqueous hydrochloric acid solution ("$H_2O$"/"OR" = 2.0) were added thereto, and this was thoroughly mixed using a disperser to obtain a mixed solution. This mixed solution was stirred for 2 hours in a constant temperature bath at 25°C whereby the weight average molecular weight was controlled to become 4000, to obtain a silicone resin (B).

Then, as the fine hollow silica particles, fine hollow silica IPA dispersed sol (solid content: 20 wt%, the average first particle diameter: about 35 nm, the thickness of shell: about 8 nm, manufactured by Shokubai Kasei Kogyo K.K.) was added to the silicone resin-M (B) so that the fine hollow silica particles/silicone resin-M (calculated as condensed compound) had a weight ratio of 80/20 on the basis of solid content, and thereafter, these were diluted with methanol so that the solid content became 1%, thereby the coating material composition was obtained.

Then, the coating material composition was left for 1 hour, and then, it was applied to the surface of the soda-lime glass (thickness: 1 mm, top surface), which was polished and rinsed in advance with cerium oxide particles, with a wire bar coater, to form a coating film having a thickness of about 100 nm, and further it was left and dried for 1 hour, and the resulting coating film was subjected to heat treatment at 200°C for 10 minutes under oxygen atmosphere to

obtain a hardened coating.

EXAMPLE 11

356 parts of methanol were added to 208 parts of tetraethoxysilane, and further 126 parts of water and 18 parts of 0.01 N aqueous hydrochloric acid solution ("$H_2O$"/"OR" = 2.0) were added thereto, and this was thoroughly mixed using a disperser to obtain a mixed solution. This mixed solution was stirred for 2 hours in a constant temperature bath at 25°C, and was heated for 20 hours in a constant temperature bath at 60°C whereby a weight average molecular weight was controlled to become 6000, to obtain a silicone resin-M (C).

Then, as fine hollow silica particles, fine hollow silica IPA dispersed sol (solid content: 20 wt%, the average first particle diameter: about 35 nm, the thickness of shell: about 8 nm, manufactured by Shokubai Kasei Kogyo K.K.) was added to the silicone resin-M (C) so that the fine hollow silica particles/silicone-resin-M (calculated as condensed compound) had a weight ratio of 80/20 on the basis of solid content, and further, it was diluted with methanol so that the solid content became 1%, thereby the coating material composition was obtained.

Then, the coating material composition was left for 1 hour, and then, it was applied to the surface of soda-lime glass (thickness: 1 mm, top surface), which was polished and rinsed in advance with cerium oxide particles, with a wire bar coater, to form a coating film having a thickness of about 100 nm, and further it was left 1 hour, and the resulting coating film was subjected to heat treatment at 200°C, for 10 minutes to obtain a hardened coating.

EXAMPLE 12

A coating material composition was prepared in the same manner as in Example 11 except that as an organic zirconium component $Zr(OC_4H_9)_3(C_5H_7O_2)$ was further added to give 1 wt% $ZrO_2$ in a converted solid content on the basis of the total solid content of the coating material composition.

And, the coating material composition was applied and dried, and then subjected to heat treatment to obtain a hardened coating, in the same manner as in Example 11.

EXAMPLE 13

356 parts of methanol were added to 178 parts of methyltriethoxysilane, and further 90 parts of water and 18 parts of 0.01 N aqueous hydrochloric acid solution ("$H_2O$"/"OR" = 2.0) were added thereto, and this was throughly mixed using a disperser to obtain a mixed solution. This mixed solution was stirred for 2 hours in a constant temperature bath at 25°C, whereby the weight average molecular weight was controlled to become 800, to obtain a silicone resin-M (D).

Then, as the fine hollow silica particles, fine hollow silica IPA dispersed sol (solid content: 20 wt%, the average first particle diameter: about 35 nm, the thickness of shell: about 8 nm, manufactured by Shokubai Kasei Kogyo K.K.) was added to the silicone resin-M (D) so that the fine hollow silica particles/silicone resin-M (calculated as condensed compound) had the weight ratio of 80/20 on the basis of solid content, and further, it was diluted with methanol so that the solid content became 1%, thereby the coating material composition was obtained.

Then, the coating material composition was left for 1 hour, and then, it was applied to the surface of soda-lime glass (thickness: 1 mm, top surface), which was polished and rinsed in advance with cerium oxide particles, with a wire bar coater, to form a coating film having a thickness of about 100 nm, and further it was left and dried for 1 hour. The resulting coating film was subjected to heat treatment at 200°C for 10 minutes to obtain a hardened coating.

COMPARATIVE EXAMPLE 1

A coating material composition was prepared in the same manner as in Example 2 except that silica methanol sol (trade name: MA-ST, manufactured by Nissan Kagaku Kogyo K.K., the average particle diameter: 10 to 20 nm) was used as the fine silica particles, which did not have cavities inside of the shell, in place of the fine hollow silica particles used in Example 2.

And, the coating material composition was applied and dried, and then subjected to heat treatment to form a hardened coating, in the same manner as in Example 2.

The mixing ratios in the above Examples 1 to 13 and Comparative Example 1 are shown in Table 1.

TABLE 1

| (Mixing ratios when the total solid content is assumed to be 100 parts by weight) | | | | |
|---|---|---|---|---|
| | Fine hollow silica particles | Silicone resin-M ($SiO_2$ converted) | Fine silica particles | Organic zirconium ($ZrO_2$ converted) |
| Example 1 | 70 | 30 | | |
| Example 2 | 80 | 20 | | |
| Example 3 | 90 | 10 | | |
| Example 4 | 80 | 20 | | |
| Example 5 | 80 | 20 | | |
| Example 6 | 80 | 20 | | |
| Example 7 | 79.2 | 19.8 | | 1 |
| Example 8 | 80 | 15 | 5 | |
| Example 9 | 79.2 | 15.2 | 5 | 1 |
| Example 10 | 80 | 20 | | |
| Example 11 | 80 | 20 | | |
| Example 12 | 79.2 | 19.8 | | 1 |
| Example 13 | 80 | 20 | | |
| Comparative Example 1 | 80 | 20 | | |

As to the hardened coating as obtained in the above Examples 1 to 13 and Comparative Example 1, the total light transmittance, reflectance, haze rate, refractive index, and mechanical strength were measured and the performance of each hardened coating was evaluated.

(Total light transmittance)

The total light transmittance was measured using a spectrophotometer ("U-3400" manufactured by Hitachi Seisakusho) at a wavelength of 500 nm.

(Reflectance)

The reflectance was measured using a spectrophotometer ("U-3400" manufactured by Hitachi Seisakusho) at a wavelength of 500 nm.

(Haze rate)

The haze rate was measured using a hazemeter ("NDH 2000" manufactured by Nippon Denshoku Industries Co., Ltd.).

(Refractive index)

The cracking part of glass was observed by a scanning electron microscope, and the thickness of the hardened coating was measured, and then the refractive index was determined by an ellipsometer ("EMS-1" manufactured by ULVAC).

(Mechanical strength)

The surface of the hardened coating was rubbed with steel wool # 0000, and the mechanical strength was evaluated based on the occurrence levels of flaws generated on the hardened coating:

A: No flaw was caused.
B: A few flaws were caused.
C: Flaws were caused.
D: Many flaws were caused (whitening or peeling).

Results of the above tests are shown in Table 2.

TABLE 2

| | Total light transmittance (%) | Reflectance (%) | Haze rate (%) | Refractive index | Mechanical strength |
|---|---|---|---|---|---|
| Example 1 | 96.4 | 0.6 | 0.4 | 1.28 | A |
| Example 2 | 96.5 | 0.4 | 0.5 | 1.25 | B |
| Example 3 | 96.8 | 0.2 | 0.5 | 1.22 | C |
| Example 4 | 96.7 | 0.3 | 0.5 | 1.23 | B |
| Example 5 | 96.6 | 0.4 | 0.5 | 1.24 | B |
| Example 6 | 96.7 | 0.3 | 0.6 | 1.22 | B |
| Example 7 | 96.5 | 0.5 | 0.4 | 1.25 | A |
| Example 8 | 96.5 | 0.5 | 0.4 | 1.25 | A |
| Example 9 | 96.6 | 0.4 | 0.4 | 1.25 | A |
| Example 10 | 96.7 | 0.3 | 0.3 | 1.23 | C |
| Example 11 | 96.8 | 0.2 | 0.3 | 1.22 | C |
| Example 12 | 96.8 | 0.2 | 0.3 | 1.22 | B |
| Example 13 | 95.5 | 1.5 | 0.5 | 1.4 | D |
| Comparative Example 1 | 94.4 | 2.3 | 0.3 | 1.49 | A |

As shown in Table 2, it was confirmed that in all of Examples 1 to 13, in particular Examples 1 to 12, the total light transmittance was high, and the reflectance and refractive index were lower. Also, as to the results of Example 7 which included organic zirconium, Example 8 in which the fine hollow silica particles were used in combination with the silica particles which did not have cavities inside of the shell, and Example 9 in which the fine hollow silica particles including organic zirconium were used in combination with the silica particles that did not have cavities inside of the shell, it was recognized that the mechanical strength was extraordinarily high.

As to the haze rate in Comparative Example 1, there was no much difference from the results of Examples 1 to 13. When trifunctional hydrolyzable organosilane was not used as in Example 13, the total light transmittance was lower, and the reflectance and refractive index were higher, and further the mechanical strength was insufficient, compared with the case where the tetrafunctional hydrolyzable organosilane was used as in Examples 1 to 12. In Comparative Example 1 in which the fine hollow silica particles were not used, the total light transmittance was lower, and the reflectance and refractive index were very higher.

## Claims

**1.** A coating material composition comprising at least fine hollow particles and a matrix-forming material, wherein when the coating material composition is applied and dried to form a coating film, the matrix-forming material forms a porous matrix, and
wherein the matrix-forming material comprises a partially hydrolyzed compound and/or a completely hydrolyzed compound having a weight average molecular weight of 2000 or more, the partially hydrolyzed compound and/or the completely hydrolyzed compound being obtained by hydrolyzing a tetraalkoxysilane represented by $SiX_4$ (X = OR, R is a monovalent hydrocarbon group) in the presence of water of which amount is such that a molar ratio of

$[H_2O]/[OR]$ is in the range between 1.0 and 5.0, and in the presence of an acid catalyst.

2. The coating material composition according to claim 1 wherein a refractive index of he coating film of the matrix-forming material ranges is in the range between 1.35 and 1.50.

3. The coating material composition according to claim 1 wherein the matrix-forming material is hydrophilic.

4. The coating material composition according to claim 1 wherein a refractive index of the coating film which is obtainable by applying and drying the coating material composition on a substrate is in the range between 1.1 and 1.35.

5. The coating material composition according to claim 1 wherein a porosity of the coating film which is obtainable by applying and drying the coating material composition on a substrate is in the range between 10 and 95%.

6. The coating material composition according to claim 1 wherein a contact angle of water drop on a surface of the coating film which is obtainable by applying and drying the coating material composition on a substrate is 20° or less.

7. A coating material composition according to claim 1 wherein the coating composition comprises a curing catalyst.

8. The coating material composition according to claim 1 wherein the coating material composition comprises further colloidal silica.

9. The coating material composition according to claim 1 wherein the coating material composition comprises further a silane coupling agent.

10. The coating material composition according to claim 1 wherein the coating material composition comprises further photosemiconductor fine particles.

11. The coating material composition according to claim 1 wherein the coating material composition comprises further an organic porous filler.

12. The coating material composition according to claim 1 wherein the coating material composition comprises further an electrically conductive material.

13. The coating material composition according to claim 1 wherein a weight ratio of the fine hollow particles contained to the matrix-forming material is in the range between 95/5 and 30/70.

14. An article comprising a coating film formed by using the coating material composition according to claim 1.

15. The article according to claim 14 wherein the article is a display, a lens, a building material, a glass for car, or a screen.

16. The article according to claim 14 wherein the article is a substrate for a touch panel, a back light unit part, a brightness enhancing film for liquid crystals (a prism, a semi-permeable film), an outermost surface element of a solar cell, an illuminating lamp, a reflective lens, or an LCD color filter.

17. The article according to claim 14 wherein the article is an organic EL light emitting element, an inorganic EL light emitting element, or a fluorescent light emitting element.

**Patentansprüche**

1. Beschichtungsmaterialzusammensetzung, umfassend wenigstens feine hohle Teilchen und ein matrixbildendes Material, wobei beim Auftragen und Trocknen der Beschichtungsmaterialzusammensetzung unter Bildung eines Beschichtungsfilms das matrixbildende Material eine poröse Matrix bildet; und
wobei das matrixbildende Material eine partiell hydrolysierte Verbindung und/oder eine vollständig hydrolysierte Verbindung mit einem Gewichtsmittel des Molekulargewichts von 2000 oder mehr umfasst, wobei die partiell hydrolysierte Verbindung und/oder die vollständig hydrolysierte Verbindung erhalten wird, indem man ein Tetraalkoxysilan, das durch $SiX_4$ (X = OR, wobei R eine einwertige Kohlenwasserstoffgruppe ist) dargestellt wird, in Gegenwart von Wasser, dessen Menge so groß ist, dass das Stoffmengenverhältnis von $[H_2O]/[OR]$ im Bereich zwi-

schen 1,0 und 5,0 liegt, und in Gegenwart eines Säurekatalysators hydrolysiert.

2. Beschichtungsmaterialzusammensetzung gemäß Anspruch 1, wobei der Brechungsindex des Beschichtungsfilms des matrixbildenden Materials im Bereich zwischen 1,35 und 1,50 liegt.

3. Beschichtungsmaterialzusammensetzung gemäß Anspruch 1, wobei das matrixbildende Material hydrophil ist.

4. Beschichtungsmaterialzusammensetzung gemäß Anspruch 1, wobei der Brechungsindex des Beschichtungsfilms, der durch Auftragen und Trocknen der Beschichtungsmaterialzusammensetzung auf einem Substrat erhältlich ist, im Bereich zwischen 1,1 und 1,35 liegt.

5. Beschichtungsmaterialzusammensetzung gemäß Anspruch 1, wobei die Porosität des Beschichtungsfilms, der durch Auftragen und Trocknen der Beschichtungsmaterialzusammensetzung auf einem Substrat erhältlich ist, im Bereich zwischen 10 und 95% liegt.

6. Beschichtungsmaterialzusammensetzung gemäß Anspruch 1, wobei der Kontaktwinkel eines Wassertropfens auf einer Oberfläche des Beschichtungsfilms, der durch Auftragen und Trocknen der Beschichtungsmaterialzusammensetzung auf einem Substrat erhältlich ist, 20° oder weniger beträgt.

7. Beschichtungsmaterialzusammensetzung gemäß Anspruch 1, wobei die Beschichtungszusammensetzung einen Härtungskatalysator umfasst.

8. Beschichtungsmaterialzusammensetzung gemäß Anspruch 1, wobei die Beschichtungsmaterialzusammensetzung weiterhin kolloidales Siliciumoxid umfasst.

9. Beschichtungsmaterialzusammensetzung gemäß Anspruch 1, wobei die Beschichtungsmaterialzusammensetzung weiterhin ein Silankopplungsmittel umfasst.

10. Beschichtungsmaterialzusammensetzung gemäß Anspruch 1, wobei die Beschichtungsmaterialzusammensetzung weiterhin feine Photohalbleiterteilchen umfasst.

11. Beschichtungsmaterialzusammensetzung gemäß Anspruch 1, wobei die Beschichtungsmaterialzusammensetzung weiterhin einen organischen porösen Füllstoff umfasst.

12. Beschichtungsmaterialzusammensetzung gemäß Anspruch 1, wobei die Beschichtungsmaterialzusammensetzung weiterhin ein elektrisch leitfähiges Material umfasst.

13. Beschichtungsmaterialzusammensetzung gemäß Anspruch 1, wobei das Gewichtsverhältnis der feinen hohlen Teilchen, die in dem matrixbildenden Material enthalten sind, im Bereich zwischen 95/5 und 30/70 liegt.

14. Artikel, der einen Beschichtungsfilm umfasst, welcher durch Verwendung der Beschichtungsmaterialzusammensetzung gemäß Anspruch 1 gebildet ist.

15. Artikel gemäß Anspruch 14, wobei der Artikel eine Anzeige, eine Linse, ein Baustoff, eine Scheibe für ein Auto oder ein Bildschirm ist.

16. Artikel gemäß Anspruch 14, wobei der Artikel ein Substrat für ein Touch-Panel, ein Teil einer Rücklichtseinheit, eine helligkeitsverstärkende Folie für Flüssigkristalle (ein Prisma, eine halbdurchlässige Folie), ein äußerstes Oberflächenelement einer Solarzelle, eine Beleuchtungslampe, eine reflektierende Linse oder ein LCD-Farbfilter ist.

17. Artikel gemäß Anspruch 14, wobei der Artikel ein organisches elektrolumineszentes lichtemittierendes Element, ein anorganisches elektrolumineszentes lichtemittierendes Element oder ein fluoreszierendes lichtemittierendes Element ist.

## Revendications

1. Composition de matériau de revêtement comprenant au moins des particules creuses fines et un matériau formant

une matrice, dans laquelle le matériau formant une matrice forme une matrice poreuse lorsque la composition de matériau de revêtement est appliquée et séchée pour former un film de revêtement ; et
dans laquelle le matériau formant une matrice comprend un composé partiellement hydrolysé et/ou un composé complètement hydrolysé ayant un poids moléculaire moyen en poids de 2000 ou plus, le composé partiellement hydrolysé et/ou le composé complètement hydrolysé étant obtenus par hydrolyse d'un tétraalcoxysilane représenté par $SiX_4$ (X = OR, R étant un groupe hydrocarboné monovalent) en présence d'eau, la quantité de laquelle est telle que le rapport molaire de $[H_2O]/[OR]$ est compris dans la gamme entre 1,0 et 5,0, et en présence d'un catalyseur acide.

**2.** Composition de matériau de revêtement selon la revendication 1, dans laquelle l'indice de réfraction du film de revêtement du matériau formant une matrice est compris dans la gamme entre 1,35 et 1,50.

**3.** Composition de matériau de revêtement selon la revendication 1, dans laquelle ledit matériau formant une matrice est hydrophile.

**4.** Composition de matériau de revêtement selon la revendication 1, dans laquelle l'indice de réfraction du film de revêtement, qui peut être obtenu par application et séchage de la composition de matériau de revêtement sur un substrat, est compris dans la gamme entre 1,1 et 1,35.

**5.** Composition de matériau de revêtement selon la revendication 1, dans laquelle la porosité du film de revêtement, qui peut être obtenu par application et séchage de la composition de matériau de revêtement sur un substrat, est comprise dans la gamme entre 10 et 95 %.

**6.** Composition de matériau de revêtement selon la revendication 1, dans laquelle l'angle de contact d'une goutte d'eau sur une surface du film de revêtement, qui peut être obtenu par application et séchage de la composition de matériau de revêtement sur un substrat, est 20° ou moins.

**7.** Composition de matériau de revêtement selon la revendication 1, dans laquelle la composition de revêtement comprend un catalyseur de durcissement.

**8.** Composition de matériau de revêtement selon la revendication 1, dans laquelle la composition de matériau de revêtement comprend en outre de la silice colloïdale.

**9.** Composition de matériau de revêtement selon la revendication 1, dans laquelle la composition de matériau de revêtement comprend en outre un agent de couplage silane.

**10.** Composition de matériau de revêtement selon la revendication 1, dans laquelle la composition de matériau de revêtement comprend en outre des particules fines de photo-semi-conducteur.

**11.** Composition de matériau de revêtement selon la revendication 1, dans laquelle la composition de matériau de revêtement comprend en outre une charge poreuse organique.

**12.** Composition de matériau de revêtement selon la revendication 1, dans laquelle la composition de matériau de revêtement comprend en outre un matériau électriquement conducteur.

**13.** Composition de matériau de revêtement selon la revendication 1, dans laquelle le rapport pondéral des particules creuses fines contenues au matériau formant une matrice est compris dans la gamme entre 95/5 et 30/70.

**14.** Article comprenant un film de revêtement formé en utilisant la composition de matériau de revêtement selon la revendication 1.

**15.** Article selon la revendication 14, dans lequel ledit article est un affichage, une lentille, un matériau de construction, un verre automobile ou un écran.

**16.** Article selon la revendication 14, dans lequel ledit article est un substrat pour un écran tactile, une pièce de bloc de lumière arrière, un film renforçant la luminosité pour cristaux liquides (un prisme, un film semi-perméable), un élément de surface le plus extérieure d'une cellule solaire, une lampe d'éclairage, une lentille réfléchissante, ou un filtre couleur pour affichage LCD.

**17.** Article selon la revendication 14, dans lequel ledit article est un dispositif d'émission de lumière électroluminescent organique, un dispositif d'émission de lumière électroluminescent inorganique ou un dispositif d'émission de lumière fluorescent.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001327878 A
- JP 2001233611 A
- JP P2001233611 A